# FASCICULE DE BREVET EUROPEEN

(11) **EP 3 589 821 B1**
(45) Date de publication et mention de la délivrance du brevet: **09.12.2020**
(21) Numéro de dépôt: 18709701.9
(22) Date de dépôt: 26.02.2018
(51) Int. Cl.: F01D 21/04, F01D 25/16, F16C 35/077, F01D 21/08, F16C 27/06, F16C 35/04

(54) **MOTEUR D'AERONEF COMPRENANT UN PALIER ENTRE DEUX ARBRES CONCENTRIQUES**
FLUGZEUGMOTOR MIT EINEM LAGER ZWISCHEN ZWEI KONZENTRISCHEN WELLEN
AIRCRAFT ENGINE COMPRISING A BEARING BETWEEN TWO CONCENTRIC SHAFTS

(30) Priorité: 28.02.2017 FR 1700200
(43) Date de publication de la demande: 08.01.2020
(73) Titulaire: Safran Aircraft Engines, 75015 Paris (FR)
(72) Inventeur: BENYAMIN, Serge, 77550 Moissy-Cramayel (FR)
(74) Mandataire: Brevalex
(86) Numéro de dépôt international: PCT/FR2018/050445
(87) Numéro de publication internationale: WO 2018/158528

(56) Documents cités:
- US-A- 3 727 998
- US-A1- 2009 139 201
- US-A1- 2013 022 448

## Description

Le sujet de l'invention est un moteur d'aéronef comprenant un palier entre deux arbres concentriques, en général un arbre de rotor basse pression et un arbre de rotor haute pression de turbomachine.

En cas d'avarie telle qu'une rupture d'aube, en particulier une rupture d'aube basse pression appartenant au rotor basse pression qui peut être provoquée par l'ingestion d'un corps étranger à l'entrée du moteur, le balourd qui apparaît dans ce rotor est responsable de vibrations et de déplacements radiaux importants, surtout si le support d'un des paliers de l'arbre cède et qu'une rotation en moulinet de l'arbre (« windmilling ») apparaît. Des efforts et déplacements importants peuvent alors être communiqués aussi au rotor haute pression par le palier inter-arbres, des contacts entre les rotors associés aux deux arbres deviennent possibles, ainsi que l'extinction ou la destruction du moteur.

Le but essentiel de l'invention est de limiter les conséquences de l'apparition d'un balourd, notamment consécutif à une rupture d'aube, sur le rotor resté intact, en limitant les dégâts, efforts et/ou chocs que le rotor endommagé pourrait sinon lui transmettre et en lui permettant ainsi de continuer à fonctionner, au moins en un mode dégradé du moteur, pendant une durée suffisante pour réduire le risque ou la gravité d'un accident.

US 3727998 A, US 2013/0022448 A1 et US 2009/0139201 A1 décrivent des découpleurs mécaniques associés à un roulement placé entre un support fixe et un arbre tournant, les découpleurs comprennent des éléments amortissants ; l'invention est relative à un dispositif comprenant aussi un découpleur, associé à un palier tel qu'un roulement qui est placé entre deux arbres concentriques pour limiter les conséquences d'une rupture et d'un balourd, en permettant à l'arbre restant intact de fonctionner normalement tout en permettant un fonctionnement dégradé de l'arbre ayant subi le dommage.

Sous une forme générale, l'invention concerne un moteur d'aéronef comprenant deux arbres concentriques s'étendant dans une direction axiale du moteur, un palier soutenant un premier des arbres, et un support reliant le palier à un second des arbres, caractérisé en ce que le support comprend un découpleur mécanique, composé principalement d'un corps rigide, en appui par deux faces opposées dans une direction radiale du moteur, perpendiculaire à la direction axiale, sur deux faces d'appui respectivement solidaires du second arbre et du palier, le corps rigide étant apte à se rompre à un seuil d'effort à transmettre entre les faces d'appui, et d'un corps amortisseur logé dans une cavité du support délimitée par les faces d'appui.

La principale caractéristique de ce dispositif est qu'il maintient la rigidité du support en fonctionnement normal, avec donc l'absence de risque de faire apparaître des instabilités, contrairement à un support amortissant classique, mais qu'un découplage important des mouvements radiaux est produit entre les arbres en cas d'accident tel qu'une rupture d'aube, qui produit un balourd suffisant à rompre le dispositif. Les mouvements radiaux de l'arbre haute pression sont alors peu affectés par ceux de l'arbre basse pression, et son fonctionnement est donc peu altéré. Ce découplage s'accompagne d'un amortissement susceptible d'atténuer les instabilités du rotor endommagé. En d'autres termes, le système comprend un état où des portions respectives du palier sont respectivement solidaires des arbres et un état où une desdites portions du palier devient mobile dans la direction radiale par rapport à l'arbre dont elle était solidaire, et amortie par rapport audit arbre.

Parmi des perfectionnements qu'on peut apporter à cette conception de base, on peut citer les suivants : le corps rigide est composé de deux parties, délimitant chacune la cavité entre les faces d'appui et protégeant ainsi commodément le corps amortisseur; le corps rigide est en matière fragile, qui est immédiatement détruite quand le seuil de rupture est atteint, et libère le corps amortisseur; une matière fragile convenable est une céramique, pouvant être poreuse ; la matière fragile peut être précontrainte ; le corps amortisseur peut être en élastomère, ou consister en un sac rempli d'un fluide.

L'invention sera maintenant décrite en liaison aux figures, qui décrivent certaines réalisations possibles de l'invention non exclusives d'autres :
- la figure 1 est une vue générale d'un moteur pouvant être équipé de l'invention ;
- la figure 2 représente le dispositif caractéristique ;
- la figure 3, le même dispositif et le fonctionnement du moteur en cas d'avarie ;
- et les figures 4, 5, 6 et 7, quatre variantes de réalisation du corps rigide de l'invention.

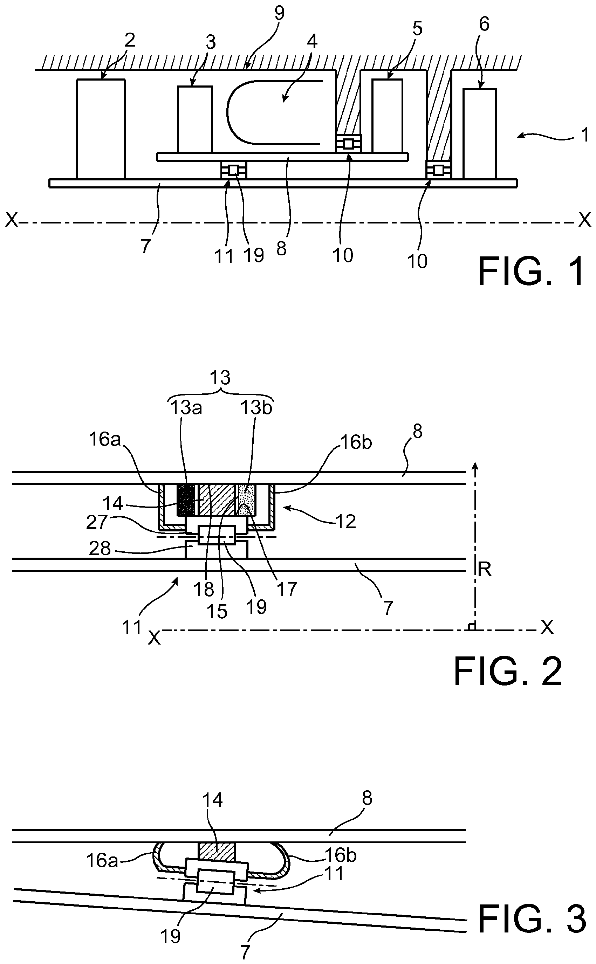

On se reporte à la figure 1.

Une turbomachine d'aéronef de type classique comprend successivement, le long d'une veine 1 d'écoulement des gaz et dans une direction axiale X, un compresseur basse pression 2, un compresseur haute pression 3, une chambre de combustion 4, une turbine haute pression 5 et une turbine basse pression 6, les compresseurs et les turbines étant composés d'étages d'aubes fixes et mobiles alternant le long de la veine 1. Les aubes mobiles dépendent de rotors comprenant notamment un arbre basse pression 7 dont dépendent les aubes mobiles du compresseur basse pression 2 et de la turbine basse pression 6, et un arbre haute pression 8 dont dépendent les aubes mobiles du compresseur haute pression 3 et de la turbine haute pression 5. Le moteur comprend encore un stator 9 dans lequel les arbres 7 et 8 sont soutenus par des paliers 10, dont certains seulement sont représentés. De plus, un palier 11 peut être ajouté entre les deux arbres 7 et 8, et c'est à cet endroit que l'invention est appliquée.

On se reporte maintenant à la figure 2. Le palier 11 peut être un roulement à rouleaux 19 ou autre. Il comprend une bague intérieure 28 qui est ici directement en contact avec l'arbre basse pression 7, et une bague extérieure 27 qui est reliée à l'arbre à haute pression 8 par un support 12, qui est un découpleur comprenant deux parties principales : un corps rigide 13 composé ici de deux rondelles 13a et 13b dont la face radiale intérieure s'appuie sur une face d'appui 17 de la bague extérieure du palier 11, et la face radiale extérieure sur une face d'appui 18 de l'arbre haute pression 8 ; et un corps amortisseur 14 logé dans une cavité 15 délimitée axialement par les rondelles 13a et 13b, et radialement par la face d'appui 17 de la bague extérieure 27 du palier 11 et la face d'appui 18 de l'arbre haute pression 8. Le support 12 comprend encore des flasques 16a et 16b reliant l'arbre haute pression 8 à la bague extérieure du palier 11 en couvrant les rondelles 13a et 13b et entre lesquels le corps rigide 13 et le corps amortisseur 14 sont placés. La direction radiale du moteur est notée R, perpendiculaire à X.

Le corps rigide 13 a pour propriété principale de soutenir le palier 11 en maintenant constante sa distance à l'arbre haute pression 8 dans des conditions normales de fonctionnement, avec des déformations réduites provenant d'une élasticité faible, mais de se rompre s'il est soumis à des efforts anormaux, consécutifs normalement à un balourd important subi par l'un des arbres, notamment l'arbre basse pression 7. Le corps amortisseur 14 est inactif pendant le service normal, et il entre en service seulement à la rupture du corps rigide 13. Il peut être logé dans la cavité 15 avec du jeu au moins en direction radiale R, mais il est plus avantageux qu'il y soit logé sans jeu positif et avec une précontrainte dans la direction radiale R entre les faces d'appui 17 et 18, afin qu'il devienne actif en se comprimant dès le début de la rupture du corps rigide 13.

Comme le montre la figure 3 qui représente l'état du dispositif après une rupture d'aube et la rupture du corps rigide 13, l'arbre basse pression 7 subissant le balourd prend alors une rotation en moulinet (« windmilling ») qui le place en biais par rapport à l'autre et le rapproche de lui. Le corps amortisseur 14 est écrasé sur une partie de sa circonférence entre l'arbre haute pression 8 et le palier 11, mais empêche un rapprochement plus important et une instabilité plus grande du système, et l'arbre restant intact (ici et usuellement, l'arbre haute pression 8) subit seulement de faibles déplacements radiaux et peut continuer à faire fonctionner le moteur.

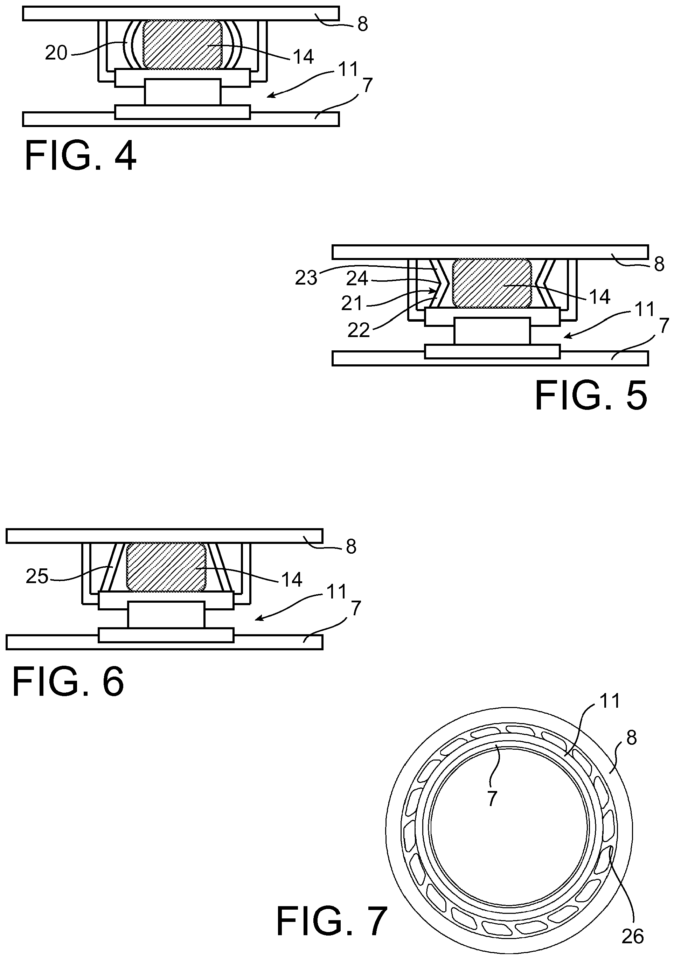

Le corps rigide 13 est donc essentiellement indéformable pendant le fonctionnement normal, mais apte à se rompre complètement quand le seuil d'effort pour lequel il a été conçu est atteint. Il comporte plus généralement une amorce de rupture. Soit il s'agit d'une amorce de rupture réalisée par la structure microscopique de matériaux tels que des céramiques à usage technique élaborées généralement avec un frittage qui leur donne une haute résistance mécanique, et qui peuvent résister aussi à des températures élevées. Le matériau est inhomogène et ce sont ses hétérogénéités qui créent les amorces de rupture. Le seuil de rupture peut être ajusté en fabriquant ces céramiques avec une porosité définie, en les montant avec une précontrainte, ou en choisissant judicieusement les dimensions du corps rigide 13. Un bloc de rapport hauteur/largeur proche de 1 est préféré pour construire un tel corps rigide. Soit il s'agit d'une amorce de rupture réalisée par la forme du corps rigide 13, lui permettant de travailler en cisaillement. On choisira dans ce cas un matériau homogène, typiquement du métal. Plusieurs formes sont adaptées pour travailler en cisaillement. On mentionnera, parmi les formes possibles du corps rigide 13 dotées d'une irrégularité de forme permettant de créer cette amorce de rupture : une forme bombée ou arquée 20 dans la direction axiale X (figure 4) ; une forme biconique à section coudée 21 (figure 5), formée de deux portions 22 et 23 d'inclinaisons différentes, préférablement de sens opposés, aboutissant respectivement aux faces d'appui 17 et 18 et se joignant à mi-hauteur en formant un angle 24 ; une forme conique à section inclinée 25, encore dans la direction axiale X (figure 6) ; ou une construction en colonnettes 26 inclinées dans la direction angulaire de la machine (figure 7). Pour résumer, l'irrégularité de forme du corps rigide 13 apte à créer une amorce de rupture peut consister en une inclinaison, ou une variation d'inclinaison, dans la direction axiale X et/ou une direction angulaire perpendiculaire à la direction axiale X et à la direction radiale R ; le corps rigide 13 peut ainsi comprendre deux portions se succédant dans la direction radiale, dont les inclinaisons sont différentes l'une de l'autre.

Quand la section du corps rigide 13 est irrégulière et inclinée, le sens d'inclinaison peut être quelconque. Si le corps rigide 13 comprend deux portions situées de part et d'autre des rouleaux 19 ou plus généralement des éléments roulants du palier 11, comme dans les réalisations représentées, ces portions peuvent être symétriques par rapport à ces éléments roulants. Enfin, le corps rigide 13 peut en général être continu ou discontinu sur la circonférence du palier 11.

Les flasques 16a et 16b n'ont pas nécessairement de rôle de résistance mécanique et peuvent donc être souples, mais ils peuvent contribuer à maintenir axialement la bague extérieure 27 du palier 11. Le corps amortisseur 14 a la fonction classique de dissipateur d'énergie et peut consister en un élastomère ou un sac rempli d'un liquide visqueux. Le support 12 et l'ensemble de ses constituants peuvent être continus ou non sur un cercle, comme le corps rigide 13. D'autres dispositions que la cavité 15 s'étendant entre deux parties opposées du corps rigide 13 peuvent aussi être considérées pour loger le corps amortisseur 14. Il est préférable que le corps rigide 13 soit limité par un volume vide dans la direction axiale X (ou deux volumes vides de part et d'autre de lui) afin de permettre son dégagement après la rupture. Enfin, le support 12 pourrait être situé à l'intérieur ou à l'extérieur du palier 11.

Le dispositif de l'invention n'a donc pas d'effets défavorables sur le fonctionnement normal du moteur, à cause de la rigidité du corps rigide 13. Après la rupture de celui-ci, l'amortissement auquel est soumis ensuite le système permet d'amortir les chocs inter-arbres tout en éloignant le régime moteur d'une éventuelle fréquence d'instabilité par décélération naturelle.

## Revendications

1. Moteur d'aéronef comprenant deux arbres concentriques (7, 8) s'étendant dans une direction axiale du moteur, un palier (11) soutenant un premier des arbres (7), et un support (12) reliant le palier à un second des arbres (8), **caractérisé en ce que** le support (12) comprend un découpleur mécanique, composé principalement d'un corps rigide (13), en appui par deux faces opposées dans une direction radiale du moteur, perpendiculaire à la direction axiale, sur deux faces d'appui (17, 18) respectivement solidaires du second arbre et du palier, le corps rigide étant apte à se rompre à un seuil d'effort à transmettre entre les faces d'appui, et un corps amortisseur (14) logé dans une cavité (15) du support délimitée par les faces d'appui.

2. Moteur selon la revendication 1, **caractérisé en ce que** le corps rigide est composé de deux parties, délimitant chacune la cavité (15) entre les faces d'appui.

3. Moteur selon la revendication 1 ou 2, **caractérisé en ce que** le découpleur est annulaire.

4. Moteur selon l'une quelconque des revendications 1 à 3, **caractérisé en ce que** le corps rigide est en matière fragile.

5. Moteur selon la revendication 4, **caractérisé en ce que** la matière fragile est une céramique.

6. Moteur selon l'une quelconque des revendications 1 à 3, **caractérisé en ce que** le corps rigide (13) s'étend dans la direction radiale avec une inclinaison dans la direction axiale et/ou une direction angulaire perpendiculaire à la direction axiale et à la direction radiale.

7. Moteur selon la revendication 6, **caractérisé en ce que** le corps rigide (13) comprend deux portions (22, 23) se succédant dans la direction radiale, l'inclinaison d'une première desdites portions étant différente de l'inclinaison d'une seconde desdites portions.

8. Moteur selon l'une quelconque des revendications 1 à 7, **caractérisé en ce que** le corps rigide (13) est limité par un volume vide dans la direction axiale.

9. Moteur selon l'une quelconque des revendications 1 à 8, **caractérisé en ce que** le corps amortisseur (14) est précontraint dans la direction radiale entre les faces d'appui (17, 18).

10. Moteur selon l'une quelconque des revendications 1 à 9, **caractérisé en ce que** le découpleur mécanique comprend encore des flasques latéraux (16) s'étendant entre le second arbre (8) et le palier (11), le corps rigide et le corps amortisseur étant placés entre les flasques.

11. Moteur selon la revendication 10, **caractérisé en ce que** les flasques (16a, 16b) sont souples.

12. Moteur selon l'une quelconque des revendications 1 à 11, **caractérisé en ce qu'**il comprend un état où des portions respectives (27, 28) du palier (11) sont respectivement solidaires des arbres et un état où une desdites portions (27) est mobile dans la direction radiale par rapport à l'arbre dont elle était solidaire et amortie par rapport audit arbre (8).

## Patentansprüche

1. Flugzeugmotor mit zwei konzentrischen Wellen (7, 8), die sich in einer Achsrichtung des Motors erstrecken, einem Lager (11), das eine erste der Wellen (7) lagert, und einem Träger (12), der das Lager mit einer zweiten der Wellen (8) verbindet, **dadurch gekennzeichnet, dass** der Träger (12) ein mechanisches Entkopplungsglied aufweist, das hauptsächlich aus einem starren Körper (13) gebildet ist, gestützt durch zwei gegenüberliegende Flächen in einer radialen Richtung des Motors senkrecht zur Achsrichtung auf zwei Auflageflächen (17, 18), welche mit der zweiten Welle bzw. mit dem Lager fest verbunden sind, wobei der starre Körper dazu geeignet ist, bei einer Schwelle von zwischen den Auflageflächen zu übertragenden Beanspruchung zu zerbrechen, und wobei sich ein Dämpfungskörper (14) in einem Hohlraum (15) des Trägers befindet, der durch die Auflageflächen begrenzt ist.

2. Motor nach Anspruch 1, **dadurch gekennzeichnet, dass** der starre Körper aus zwei Teilen zusammengesetzt ist, welche jeweils den Hohlraum (15) zwischen den Auflageflächen begrenzen.

3. Motor nach Anspruch 1 oder 2, **dadurch gekennzeichnet, dass** das Entkopplungsglied ringförmig ist.

4. Motor nach einem der Ansprüche 1 bis 3, **dadurch gekennzeichnet, dass** der starre Körper aus einem zerbrechlichen Material besteht.

5. Motor nach Anspruch 4, **dadurch gekennzeichnet, dass** das zerbrechliche Material Keramik ist.

6. Motor nach einem der Ansprüche 1 bis 3, **dadurch gekennzeichnet, dass** sich der starre Körper (13) in der radialen Richtung mit einer Neigung in Achsrichtung und/oder eine schräge Richtung senkrecht zur Achsrichtung und zur radialen Richtung erstreckt.

7. Motor nach Anspruch 6, **dadurch gekennzeichnet, dass** der starre Körper (13) zwei Bereiche (22, 23) aufweist, die in der radialen Richtung aufeinanderfolgen, wobei sich die Neigung eines ersten dieser Bereiche von der Neigung eines zweiten dieser Bereiche unterscheidet.

8. Motor nach einem der Ansprüche 1 bis 7, **dadurch gekennzeichnet, dass** der starre Körper (13) durch ein Hohlraumvolumen in der Achsrichtung begrenzt ist.

9. Motor nach einem der Ansprüche 1 bis 8, **dadurch gekennzeichnet, dass** der Dämpfungskörper (14) in der radialen Richtung zwischen den Auflageflächen (17, 18) vorgespannt ist.

10. Motor nach einem der Ansprüche 1 bis 9, **dadurch gekennzeichnet, dass** das mechanische Entkopplungsglied weiterhin seitliche Flansche (16) aufweist, die sich zwischen der zweiten Welle (8) und dem Lager (11) erstrecken, wobei der starre Körper und der Dämpfungskörper zwischen den Flanschen platziert sind.

11. Motor nach Anspruch 10, **dadurch gekennzeichnet, dass** die Flansche (16a, 16b) biegsam sind.

12. Motor nach einem der Ansprüche 1 bis 11, **dadurch gekennzeichnet, dass** er einen Zustand, in dem entsprechende Bereiche (27, 28) des Lagers (11) jeweils fest mit den Wellen verbunden sind, sowie einen Zustand aufweist, in dem einer dieser Bereiche (27) in der radialen Richtung bezüglich der Welle beweglich ist, mit der er fest verbunden und bezüglich der Welle (8) gedämpft war.

## Claims

1. An aircraft engine comprising two concentric shafts (7, 8) extending in an engine axial direction, a bearing (11) supporting a first of the shafts (7), and a support (12) connecting the bearing to a second of the shafts (8), **characterised in that** the support (12) comprises a mechanical decoupler, mainly consisting of a rigid body (13), in abutment through two opposite faces in an engine radial direction, perpendicular to the axial direction, on two abutting faces (17, 18) integral with the second shaft and the bearing respectively, the rigid body being able to be ruptured at a load threshold to be transmitted between the abutting faces, and a damper body (14) housed in a cavity (15) of the support delimited by the abutting faces.

2. The engine according to claim 1, **characterised in that** the rigid body consists of two parts, each delimiting the cavity (15) between the abutting faces.

3. The engine according to claim 1 or 2, **characterised in that** the decoupler is annular.

4. The engine according to any of claims 1 to 3, **characterised in that** the rigid body is of brittle material.

5. The engine according to claim 4, **characterised in that** the brittle material is a ceramic.

6. The engine according to any of claims 1 to 3, **characterised in that** the rigid body (13) extends in the radial direction with a slope in the axial direction and/or an angular direction perpendicular to the axial direction and to the radial direction.

7. The engine according to claim 6, **characterised in that** the rigid body (13) comprises two portions (22, 23) successively in the radial direction, the slope of a first of said portions being different from the slope of a second of said portions.

8. The engine according to any of claims 1 to 7, **characterised in that** the rigid body (13) is limited by an empty volume in the axial direction.

9. The engine according to any of claims 1 to 8, **characterised in that** the damper body (14) is pre-stressed in the radial direction between the abutting faces (17, 18).

10. The engine according to any of claims 1 to 9, **characterised in that** the mechanical decoupler further comprises side flanges (16) extending between the second shaft (8) and the bearing (11), the rigid body and the damper body being placed between the flanges.

11. The engine according to claim 10, **characterised in that** the flanges (16a, 16b) are flexible.

12. The engine according to any of claims 1 to 11, **characterised in that** it comprises a state in which respective portions (27, 28) of the bearing (11) are respectively integral with the shafts and a state in which one of said portions (27) is movable in the radial direction with respect to the shaft with which it was integral and dampened with respect to said shaft (8).
